# NEUE EUROPÄISCHE PATENTSCHRIFT

(11) **EP 2 321 117 B2**
(45) Veröffentlichungstag und Bekanntmachung des Hinweises auf die Entscheidung über den Einspruch: **18.01.2017**
(45) Hinweis auf die Patenterteilung: 22.02.2012
(21) Anmeldenummer: 09777520.9
(22) Anmeldetag: 29.07.2009
(51) Int. Cl.: B29C 70/36

(54) **LASTTRAGENDES FASERVERBUNDSTRUKTURBAUTEIL UND VERFAHREN ZU DESSEN HERSTELLUNG**
LOAD-BEARING STRUCTURAL FIBER COMPOSITE COMPONENT AND METHOD FOR PRODUCING THE SAME
PIÈCE DE STRUCTURE COMPOSITE RENFORCÉE PAR FIBRES DESTINÉE À SUPPORTER DES CHARGES ET SON PROCÉDÉ DE RÉALISATION

(30) Priorität: 12.09.2008 DE 102008046991
(43) Veröffentlichungstag der Anmeldung: 18.05.2011
(73) Patentinhaber: MT Aerospace AG, 86153 Augsburg (DE)
(72) Erfinder: SCHMIDT, Thomas, 86163 Augsburg (DE); BÖHMER, Nikolai, 86153 Augsburg (DE)
(74) Vertreter: Schwarzensteiner, Marie-Luise
(86) Internationale Anmeldenummer: PCT/EP2009/005494
(87) Internationale Veröffentlichungsnummer: WO 2010/028720

(56) Entgegenhaltungen:
- EP-A1- 1 736 674
- EP-A1- 1 862 293
- EP-A2- 1 972 550
- WO-A2-2008/119491
- DE-A1- 3 840 191
- DE-A1- 4 123 185
- DE-A1- 4 237 834
- DE-A1-102006 048 668
- DE-C1- 4 423 642
- DE-C1- 10 013 409
- DE-T2- 60 210 729
- DE-T2-602005 002 300
- GB-A- 2 381 492
- US-A1- 2008 203 601

## Beschreibung

Die vorliegende Erfindung betrifft ein lasttragendes Faserverbundstrukturbauteil in Hohlkastenbauweise in Form einer Knickstrebe für ein Bugfahrwerk eines Luft- oder Raumfahrzeuges aus Faserverbundmaterial. Die Erfindung betrifft auch ein Verfahren zur integralen Herstellung eines lasttragenden, dickwandigen Faserverbundstrukturbauteils mit komplexer verzweigter Geometrie.

Hierzu zählen im Rahmen der vorliegenden Erfindung insbesondere Fahrwerkskomponenten, wie Knickstreben, welche naturgemäß hohen mechanischen Belastungen, aber - wie bei der Verwendung in der Raumfahrt - auch hohen thermischen Belastungen ausgesetzt sind. Fahrwerkskomponenten weisen aufgrund des begrenzten vorhandenen Bauraums, insbesondere bei einziehbaren Fahrwerken mit ineinander greifenden Komponenten, häufig eine komplexe, verzweigte Struktur auf.

Solche Fahrwerkskomponenten werden derzeit als Metallbauteile ausgeführt, beispielsweise in Form von Stahl- oder Aluminium-Schmiedeteilen. Hier sind den konstruktiven Besonderheiten von Fahrwerkskomponenten, insbesondere als komplexe, verzweigte Struktur, bei der Herstellung wenig bis keine Grenzen gesetzt. Die Herstellungsdauer für Stahl- oder Aluminium-Schmiedeteile beträgt unter Umständen mehrere Monate, was nicht zuletzt auch die Produktionskosten und die Wirtschaftlichkeit des Herstellungsverfahrens beeinträchtigt.

Gegenüber den Metallen weisen Faserverbundwerkstoffe höhere spezifische Festigkeiten und Steifigkeiten auf. So besitzen Faserverbundstrukturbauteile ein im Hinblick auf Transportkosten und Energieersparnis bedeutendes Masseeinsparungspotenzial. Neben hohen mechanischen Festigkeiten und Steifigkeiten können Faserverbundwerkstoffe je nach Auswahl des verwendeten Faser- und Matrixwerkstoffes auch eine hohe Thermostabilität besitzen.

Allerdings ist aufgrund der Herstellungsweise von Faserverbund-Strukturbauteilen die Ausführung komplexer, insbesondere verzweigter, teilweise mit Hohlräumen versehener Strukturen mit engen Bauraumbegrenzungen, wie solche bei Fahrwerkskomponenten in Luft- und Raumfahrzeugen vorkommen, bisher nicht möglich gewesen.

Aufgabe der vorliegenden Erfindung ist es daher, hochbelastbare (lasttragende) Strukturbauteile mit komplexer, verzweigter Geometrie in integraler Faserverbundbauweise, insbesondere eine solche Knickstrebe bereitzustellen, welche die bisher verwendeten metallischen Bauteile, auch teilweise, ersetzen können. Die lasttragenden Strukturen in Faserverbundbauweise müssen in der Lage sein, alle Anforderungen hinsichtlich Bauraumbeschränkung, Festigkeit, Stabilität, Steifigkeit, Ermüdungsfestigkeit und Schadenstoleranz sowie Temperaturbelastbarkeit wie die metallischen Ausführungsformen oder besser zu erfüllen. Die Strukturbauteile in Faserverbundbauweise und die metallischen Ausführungen müssen -auch komponentenweise- gegeneinander austauschbar bzw. ersetzbar sein.

Gegenstand der vorliegenden Erfindung ist vorrangig eine Knickstrebe für ein Bugfahrwerk eines Luft- und Raumfahrzeuges aus Faserverbundmaterial in Hohlkastenbauweise, wie sie in Anspruch 1 definiert ist.

Eine Knickstrebe gemäß der vorliegenden Erfindung erfüllt alle Anforderungen bezüglich Bauraumbeschränkung, Festigkeit, Stabilität, Steifigkeit, Ermüdungsfestigkeit und Schadenstoleranz sowie Temperaturbelastbarkeit, weist eine deutlich geringere Strukturmasse auf und ist darüber hinaus schneller und kostengünstiger als die entsprechenden metallischen Ausführungsformen herzustellen.

Bevorzugte Ausführungsformen des erfindungsgemäßen Knickstrebe ergeben sich aus den Unteransprüchen 2 bis 7.

Die Erfindung betrifft auch ein Verfahren zur integralen Herstellung eines lasttragenden Faserverbundstrukturbauteils mit komplexer, verzweigter Geometrie in Hohlkastenbauweise gemäß den Merkmalen des Anspruchs 8. Bevorzugte Ausführungsformen hierzu ergeben sich hier aus den Unteransprüchen 9 bis 11.

Das erfindungsgemäße Verfahren wird vorzugsweise zur Herstellung von Fahrwerkskomponenten für Luft- und Raumfahrzeuge, insbesondere von darin enthaltene obere Knickstreben mit naturgemäß komplexer, verzweigter Geometrie, verwendet.

Die trockenen Faserhalbzeuge, aus welchen die Knickstrebe bzw. das Strukturbauteil aufgebaut wird, bestehen vorzugsweise aus mechanisch und/oder thermisch hoch belastbaren Fasern. Diese Fasern sind bevorzugt Kohlenstofffasern, können jedoch auch unter Glasfasern, Siliciumcarbidfasern, Mullitfasern, Borcarbidfasern, Aramidfasern oder sogar Naturfasern oder gegebenenfalls Mischungen daraus ausgewählt werden. Diese Aufzählung ist nicht als abschließend aufzufassen.

Das Fasermaterial für die Knickstrebe ist vorzugsweise unidirektional, gekreuzt und/oder multiaxial ausgerichtet und in seiner Anordnung wie üblich durch geeignete Maßnahmen, z.B. Kettfäden, fixiert.

Einzelne Faserhalbzeuge sind zu einem Schichtaufbau zusammengeführt, wobei die Einzelschichten entsprechend den Belastungen in der Struktur orientiert sind.

In diesem Zusammenhang wird darauf hingewiesen, dass zur Herstellung der Preformlinge die geschichteten, trockenen Faserhalbzeuge durch geeignete Methoden formstabil gehalten werden. Dazu wird beispielsweise ein Bindemittel verwendet, dass - in Pulverform auf den trockenen Faserhalbzeugen aufgebracht - thermisch aktiviert wird und so eine Formstabilität der Preformlinge ermöglicht.

Im Schichtaufbau im erfindungsgemäßen Strukturbauteil, respektrive der Knickstrebe sind die Faserhalbzeuge in einer Matrix eingebettet. Dazu wird beispielsweise ein flüssiges Harzsystem in den Schichtaufbau der Faserhalbzeuge infiltriert. Durch Aushärtung oder Abkühlung geht das Harz in den festen Aggregatzustand über und bildet so die Matrix, in der die Fasern fixiert sind.

Die Matrix basiert dabei vorzugsweise auf duroplastischen Harzsystemen, wie beispielsweise Epoxidharz oder Phenolharz, oder thermoplastischen Harzsystemen.

Für die beschriebene Knickstrebe ist auch ein Faserverbundwerkstoff-mit einer keramischen Matrix, beispielsweise auf Basis von Siliciumcarbid, Aluminiumoxid, Mullit oder Kohlenstoff mit einem angepassten Fertigungskonzept denkbar.

Die Einzelelemente, welche im Wesentlichen die Geometrie des Bauteils bestimmen, sind für die Knickstrebe U-Profile, welche beim Ineinandersetzen quadratische oder gegebenenfalls rechteckige Querschnitte ergeben. Im Rahmen der Verfahrensansprüche 8 bis 11 sind jedoch auch andere Profile denkbar, beispielsweise können Profile vorgesehen werden, welche im Querschnitt zu einem runden oder ovalen Bauteil führen. Ebenso sind Mischformen, falls erforderlich, denkbar.

Die Knickstrebe der vorliegenden Erfindung zeichnet sich insbesondere dadurch aus, dass sie über ihr Gesamtvolumen einen im Wesentlichen konstanten Faservolumengehalt von 60% ± 4 aufweist. Dieser Faservolumengehalt ist wesentlich für die Qualität des Faserverbundwerkstoffs und für die Belastbarkeit des Bauteiles verantwortlich. Die Einstellung dieses Merkmales geschieht durch die besondere Herstellungsweise des Faserverbundbauteils im Harzinjektionsverfahren mit einer geschlossenen Werkzeugform, in Verbindung mit den zusammengesetzten Einzelelementen - bestehend aus geschichteten Faserhalbzeugen - und genau angepassten Form- und Kernwerkzeugen.

Die Knickstrebe und ein erfindungsgemäß hergestelltes Faserverbundstrukturbauteil zeichnet sich ferner durch Wandstärken von 4 bis 30 mm, vorzugweise 20 mm, aus. Ein konstanter, hoher Faservolumengehalt von beispielsweise 60% ±4 bei derart hohen Wandstärken lässt sich bei der Herstellung eines komplexen Faserverbundbauteils in Hohlkastenbauweise in einem geschlossenen Werkzeug nur durch den erfindungsgemäßen Aufbau des Bauteils und der dazugehörigen Form- und Kernwerkzeuge verwirklichen.

Das erfindungsgemäß erzeugte Faserverbundstrukturbauteil liegt insbesondere in Form einer Fahrwerkskomponente für Luft- und Raumfahrzeuge, insbesondere für eine im einziehbaren Fahrwerk wirkende obere Knickstrebe vor.

Besonderheiten der vorliegenden Erfindung werden nachfolgend unter Bezugnahme auf die beiliegenden Zeichnungen im Detail erläutert.

Darin zeigt
- Figur 1: eine Explosionsdarstellung eines erfindungsgemäßen Bauteils zur Veranschaulichung dessen Einzelelemente;
- Figur 2: eine Zusammenstellung der Einzelelemente des Bauteils und der Kernwerkzeuge und Anordnung in einem Harzinjektionswerkzeug nach dem RTM-verfahren;
- Figur 3: eine Schnittansicht durch das erfindungsgemäße Bauteil nach Figur 1 zur Veranschaulichung des Ineinandergreifens der Einzelelemente und Anordnung in einer Harzinjektionsform;
- Figur 4: das fertige, bearbeitete Bauteil in zwei Ansichten als integrale, komplexe, verzweigte Struktur mit den entsprechenden Beschnitten.

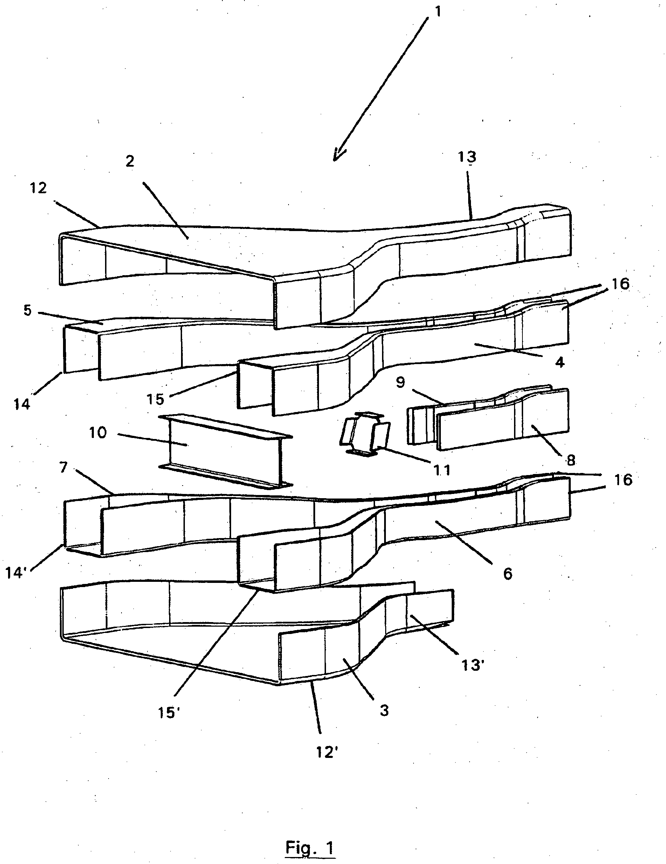

Figur 1 ist eine Explosionsdarstellung eines erfindungsgemäßen Faserverbundstrukturbauteils in Hohlkastenbauweise vor dem Beschneiden zur Veranschaulichung dessen Einzelelemente. Dargestellt ist der Aufbau einer oberen Knickstrebe für ein Bügfahrwerk eines Luft- oder Raumfahrzeuges im nicht fertigen Zustand.

Eine solche obere Knickstrebe 1 ist aufgrund ihres Einsatzbereiches hohen mechanischen und thermischen Belastungen ausgesetzt und weist aufgrund der eigenen Funktion und der damit einhergehenden engen Bauraumbeschränkungen eine komplexe, im beschnittenen Zustand verzweigte Struktur auf.

Das Bauteil 1 gemäß der vorliegenden Erfindung in Form der oberen Knickstrebe setzt sich wie in Figur 1 dargestellt aus insgesamt 10 Einzelelementen 2 bis 11 zusammen. Es handelt sich dabei um obere bzw. untere Abdeckplatten 2 bzw. 3 mit U-förmigem Profil, die sich jeweils von einem vorderen Abschnitt 12, respektive 12' zu einem hinteren Abschnitt 13 bzw. 13' verjüngen, wobei der Verlauf der Verjüngung in etwa S-förmig ist. Ferner sind in der Figur 1 obere U-förmige Einzelelemente 4 und 5 sowie untere U-förmige Einzelelemente 6 und 7 dargestellt, die sich wieder von vorderen Abschnitten 14 respektive 15 bzw. 14', respektive 15' zu hinteren Abschnitten 16, respektive 16' gemäß einem in etwa S-förmigen Verlauf verjüngen. Mittels der Einzelelemente 4, 5, respektive 6 und 7 werden, wie später gezeigt, in dem herzustellenden Faserverbundstrukturbauteil Hohlkästen ausgebildet und dann durch Beschnitt insbesondere der oberen bzw. unteren Abdeckplatten 2 bzw. 3 eine verzweigte Gabelkontur heraus gearbeitet.

Ferner sind in Figur 1 Einleger 8 und 9 dargestellt, welche in den verjüngten Teil der Einzelelemente 6, respektive 7 oder 4, respektive 5 einsetzbar sind.

Ferner ist in Figur 1 ein Deckeleinsatz 11, in Form von zwei senkrecht gekreuzten I-Profilen, sowie ein I-förmiger Stegeinsatz 10 gezeigt, welche zur Versteifung und somit zur höheren Belastbarkeit des Strukturbauteils dienen.

Alle Einzelelemente 2 bis 11 werden aus mehreren Lagen von zugeschnittenen Faserhalbzeugen hergestellt indem die Faserhalbzeuge auf speziell hergestellten Preformwerkzeugen in geeigneter Weise abgelegt, vorkompaktiert und vorgeformt werden. Durch geeignete Maßnahmen wie z.B. thermisches Aktivieren eines in Pulverform aufgebrachten Bindemittels werden diese sogenannten Preformlinge kompaktiert und formstabil gehalten. Bei der Ablage der Faserhalbzeuge ist insbesondere auf eine festgelegte Ausrichtung und Verteilung der Fasern über dem Preformwerkzeug in allen Abschnitten Sorge zu tragen. In Verbindung mit den angepassten Kern- und Formwerkzeugen ist diese Maßnahme im Hinblick auf einen konstanten Faservolumengehalt im Endprodukt und eine gleichförmige Harzinfiltration während des Harzinjektionsprozesses zu berücksichtigen.

Die Faserhalbzeuge können auf Kohlenstoff-, Glas-, Siliciumcarbid-, Mullit-, Borcarbid-, Aramid- und/oder Naturfasern basieren. Diese Aufzählung ist nicht beschränkend. Vielmehr können alle Fasermaterialien Anwendung finden, solange diese hohe mechanische und/oder thermische Belastungen aushalten. In jedem Falle werden derzeit Kohlenstofffasern bevorzugt. Die Fasern in den Faserhalbzeugen können unidirektional, gekreuzt und/oder multiaxial angeordnet sein. Die Ausrichtung der geschichteten Faserhalbzeuge im fertigen Faserverbundwerkstoff kann den sich aus der Belastungssituation ergebenden Bedürfnissen angepasst werden. Das Matrixmaterial im Faserverbundwerkstoff wird je nach beabsichtigter Verwendung des zu erzeugenden Bauteiles aus duroplastischen, thermoplastischen oder keramischen Materialien ausgewählt.

Jedes Einzelelement ist aus mehreren Lagen Faserhalbzeug aufgebaut, sodass nicht jede Lage auf demselben das Faserhalbzeug bildenden Fasertyp basieren muss. Faserverbundbauteile mit den Abmessungen einer Knickstrebe sind üblicherweise als flächige, versteifte Bauteile ausgeführt. Aufgrund der enormen Lasten, den engen Bauraumbeschränkungen und der Gewichtsanforderungen des Bauteiles ist dieses im Rahmen der vorliegenden Erfindung als Kohlenstofffaser-Verbundbauteil in Hohlkastenbauweise mit verzweigter Geometrie ausgestaltet. Die Gewichtsanforderungen an das Bauteil ergeben sich aus den Anforderungen an ein Luft- oder Raumfahrzeug, das aus Gründen der Energieeinsparung und anderen wirtschaftlichen Gründen eine möglichst große Nutzlast bei möglichst geringem Eigengewicht transportieren muss.

Die Herstellung eines Faserverbundbauteils in Hohlkastenbauweise mit den Abmessungen beispielsweise einer oberen Knickstrebe erfordert spezielle Maßnahmen, z.B. beim Harzinjektionsverfahren in einer geschlossenen Werkzeugform.

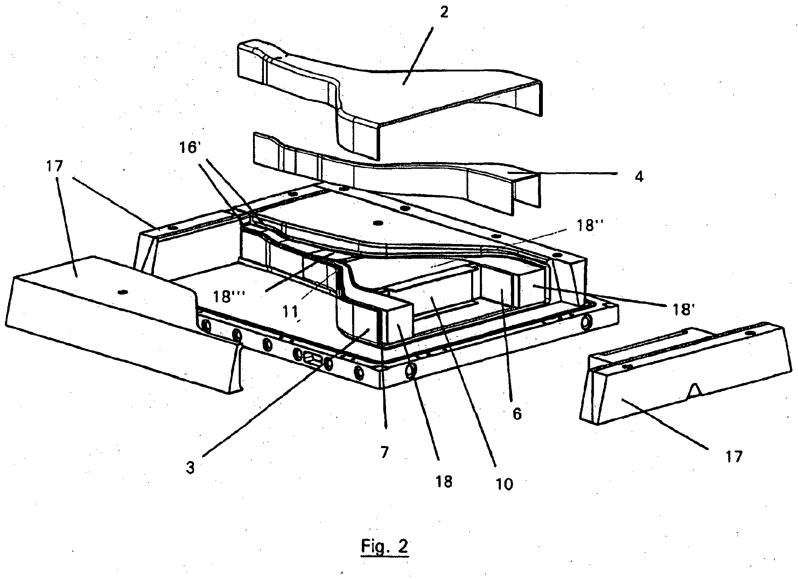

Diese Maßnahmen sind in Figur 2 veranschaulicht. Hier sind Teile eines Formwerkzeugs für das Harzinjektionsverfahren (RTM) mit der Bezugsziffer 17, angepasste Kernwerkzeuge (Stützkerne) mit Bezugsziffern 18, 18', 18", 18"' und die Einzelkomponenten des in Hohlkastenbauweise herzustellenden Bauteils gezeigt. Eine Einzelkomponente ist die in das Formwerkzeug eingelegte untere Abdeckplatte 3. In der unteren Abdeckplatte 3 sieht man die unteren Einzelelemente 6 und 7 angrenzend an die Wand der Abdeckplatte 3 positioniert. Die Einzelteile 6 und 7 besitzen wie die untere Abdeckplatte 3 ein U-Profil. In das U-Profil der Einzelelemente 6 und 7 sind entfernbare Stützkerne 18, 18' eingelegt. Diese Stützkerne 18, 18' ,sind nach der Fertigstellung des Bauteils in Hohlkastenbauweise chemisch oder physikalisch entfernbar. Es kann sich dabei auch um eine Schlauchfolie handeln, die nach der Zusammenfügung aller Einzelelemente und dem Schließen des Harzinjektionswerkzeugs mit Druck beaufschlagt wird, welcher dem Druck beim Injizieren des Harzes entgegenwirkt. Wesentlich ist, dass die Stützmethode es ermöglicht, bei den hohen Injektionstemperaturen von bis zu 180°C den Injektionsdrücken entgegenzuwirken, und dass das Stützmaterial nach Fertigstellung des Bauteiles vollständig entfernbar ist.

Im hinteren Abschnitt 16' der unteren Einzelelemente 6 und 7 mit U-Profil sind (nicht sichtbar) Einleger 8 und 9 in das Profil eingebracht, die einen Übergang von der Hohlkastenstruktur zu einem monolithischen (Lasteinleitungs-) Bereich im hinteren Teil 16' dienen. Ferner sind die Deckel- und Stegeinsätze 10 und 11 zur Versteifung der verzweigten Hohlkastenstruktur eingesetzt. Tatsächlich werden bei der Herstellung die Einzelelemente 6 und 7 zunächst, wie beschrieben, mit den Einlegern 8 und 9 sowie den Stützkernen 18 und 18' bestückt, dann werden die oberen Einzelelemente 4 und 5 jeweils darüber gestülpt und so zwei Kastenprofile hergestellt. Diese werden dann in der unteren Abdeckung 3 wie beschrieben abgelegt. Die Deckel- und Stegeinsätze 10 und 11 und weitere - später entfernbare - Stützkerne 18" und 18"' werden eingesetzt und die obere Abdeckplatte 2 über alles gestülpt. Die zur Werkzeugform gehörenden Seitenteile 17 werden positioniert und anschließend das Werkzeug mit einem nicht dargestellten Deckel geschlossen, wodurch der gesamte Aufbau fixiert wird.

Nach Evakuierung des Bauteils und Aufheizen des Werkzeugs wird das Harzsystem unter Druck und Temperatur, welche für das Verfahren im üblichen Bereich liegen, injiziert. Als Injektionsharze eignen sich die bereits vorher beschriebenen thermoplastischen oder duroplastischen Harzsysteme, z.B. RTM6. Nach dem Injektionsvorgang wird bei duroplastischen Harzsystemen das Werkzeug auf etwa 180°C weiter aufgeheizt und das Bauteil so ausgehärtet. Mit Ende der Aushärtung und vor Beginn der Abkühlphase wird das Werkzeug geöffnet, um möglichst die Fixierung der Komponenten zu lösen und eine Zerstörung des Bauteils durch unterschiedliches thermisches Schrumpfen des Bauteils und der Werkzeugform zu verhindern.

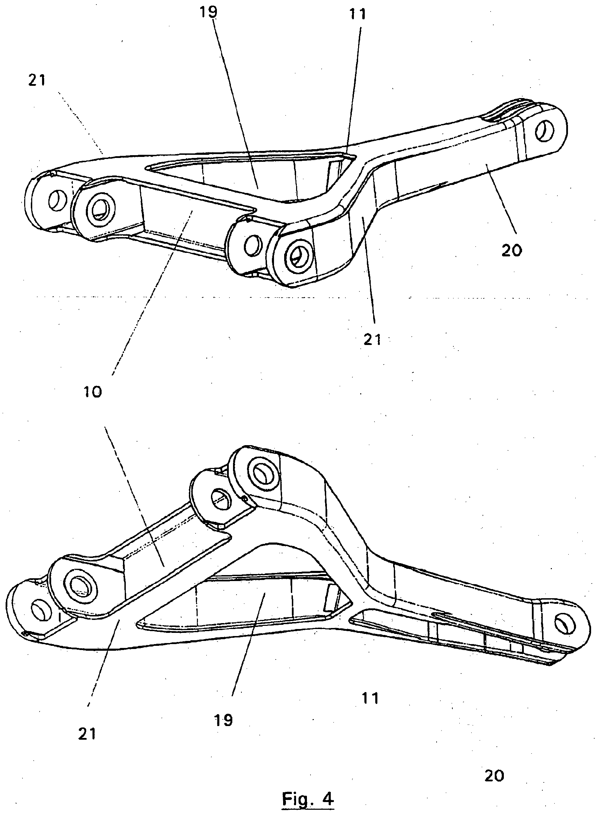

Nach dem Abkühlen wird das Bauteil aus der Form genommen und die Stützkerne in geeigneter Weise entfernt. Anschließend ist das Bauteil noch auf Endkontur zu bringen - wie in Figur 4 dargestellt. Insbesondere müssen die Abdeckplatten im vorderen Abschnitt unter Ausbildung eines Durchgriffs 19 (Fig. 4) zwischen den Abdeckplatten 2 und 3 ausgefräst werden. Hierdurch erhält das integrale, verzweigte Faserverbundstrukturbauteil erst seine endgültige Geometrie. Die Fertigstellungsmaßnahmen sind dem Fachmann jedoch geläufig und benötigen keine weitere Erläuterung.

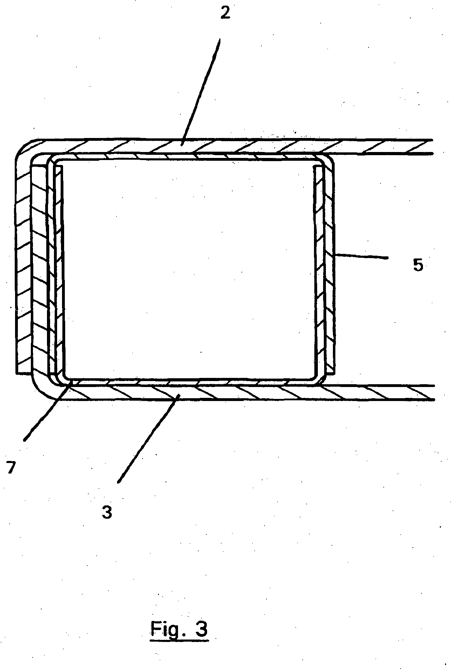

In der Figur 3 ist ein Teil des erfindungsgemäßen Faserverbundstrukturbauteils in Hohlkastenbauweise im Schnitt gezeigt, wobei von der Vorderseite gesehen, die linke Hälfte des Bauteiles dargestellt ist. Hier wird deutlich das Ineinandergreifen der Einzelelemente 2, 3 und 5, 7 unter Ausbildung eines Hohlraumes gezeigt.

Es ist festzuhalten, dass das so erzeugte Strukturbauteil in Hohlkastenbauweise einer Nachbearbeitung bedarf, insbesondere müssen die Abdeckplatten im vorderen Abschnitt unter Ausbildung eines Durchgriffes zwischen den Abdeckplatten 2 und 3 ausgefräst werden. Die Fertigstellungsmaßnahmen sind dem Fachmann jedoch geläufig und benötigen keine weitere Erläuterung.

Die Figur 4 zeigt zwei perspektivische Ansichten eines fertigen, bearbeiteten Faserverbundstrukturbauteils 1 in Form einer oberen Knickstrebe für einziehbare Fahrwerke. Hier wird die komplexe, verzweigte Struktur eines solchen Bauteils deutlich. Es zeigt einen hinteren Abschnitt 20, der einen Übergang von einem Hohlprofil zu einem monolithischen Lasteinleitungsbereich bildet. Das Bauteil 1 gabelt sich ausgehend von diesem Abschnitt 20 zu einem vorderen Abschnitt 21, bei dem die Gabelelemente 22 vollständig als Hohlkasten ausgebildet sind. Stege 10 und 11 dienen zur Aussteifung der Struktur, wie oben ausgeführt. Zwischen den Stegen 10 und 11 und den vorgenannten Gabelelementen ist ein Durchgriff 19 geschaffen, durch welchen weitere Elemente eines einziehbaren Fahrwerks geführt werden können.

## Patentansprüche

1. Knickstrebe (1) für ein Bugfahrwerk eines Luft- oder Raumfahrzeuges aus Faserverbundmaterial in Hohlkastenbauweise, bestehend aus einer oberen Abdeckplatte (2) und einer unteren Abdeckplatte (3) mit jeweils U-förmigem Profil, die sich jeweils von einem vorderen Abschnitt (12, 12') zu einem hinteren Abschnitt (13, 13') in etwa S-förmigem Verlauf verjüngen, oberen Einzelelementen (4, 5) und unteren Einzelelemente (6, 7), die sich jeweils von vorderen Abschnitten (14, 15) und (14', 15') zu hinteren Abschnitten (16, 16') in etwa S-förmigem Verlauf verjüngen, wobei die Abdeckplatten (2, 3) und die oberen Einzelelemente (4, 5) sowie die unteren Einzelelemente (6, 7) aus Preformlingen aus geschichteten Faserhalbzeugen gebildet sind und die oberen Einzelelemente (4, 5) über ihre jeweils offene Seite der U-Profile passgenau über die unteren Einzelelemente (6, 7) über deren offene Seite der U-Profile greifen, sodass zwischen ihnen ein Hohlraum ausgebildet ist und des Weiteren monolithisch ausgebildeten Einlegern (8, 9) mit rechteckigem Querschnitt im hinteren Abschnitt (16) der Einzelelemente (6, 7) und Deckel- bzw. Stegeinsätzen (10, 11) mit I-Profil, wobei die Elemente (4 bis 11) zwischen den Abdeckplatten (2, 3) aufgenommen sind, die ebenfalls passgenau übereinander greifen.

2. Knickstrebe (1) nach Anspruch 1, **dadurch gekennzeichnet, dass** die Faserhalbzeuge aus mechanisch und/oder thermisch hoch belastbaren Fasern, respektive die Faserverbundmatrix aus mechanisch und/oder thermisch hochbelastbaren Materialien bestehen.

3. Knickstrebe (1) nach Anspruch 2, **dadurch gekennzeichnet, dass** die Faserhalbzeuge auf Kohlenstofffasern, Glasfasern, Siliciumcarbidfasern, Mullitfasern, Borcarbidfasern, Aramidfasern und/oder Naturfasern basieren.

4. Knickstrebe (1) nach den Ansprüchen 1 bis 3, **dadurch gekennzeichnet, dass** die Fasern unidirektional, gekreuzt und/oder multiaxial im Faserhalbzeug angeordnet sind.

5. Knickstrebe (1) nach den Ansprüchen 1 bis 4, **dadurch gekennzeichnet, dass** die Fasern in einem duroplastischen oder thermoplastischen Matrixmaterial fixiert und ausgerichtet sind.

6. Knickstrebe (1) nach den Ansprüchen 1 bis 5, **dadurch gekennzeichnet, dass** es über sein Gesamtvolumen einen im Wesentlichen identischen Faservolumengehalt von 60% ± 4 aufweist.

7. Knickstrebe (1) nach den Ansprüchen 1 bis 6, **dadurch gekennzeichnet, dass** es eine Wandstärke von 4 bis 30 mm, vorzugsweise 20 mm aufweist.

8. Verfahren zur integralen Herstellung eines lasttragenden, dickwandigen Faserverbundstrukturbauteils mit komplexer, verzweigter Geometrie in Hohlkastenbauweise durch
a) Ausbilden von Einzelelementen (2 - 11) des herzustellenden Strukturbauteils (1) aus Preformlingen durch schichtweises Ablegen von Faserhalbzeugen auf der Geometrie des Strukturbauteils (1) angepassten Preformwerkzeugen und Ausformen, derart, dass die Einzelelemente (2 - 7) in ihrer Längserstreckung von drei Wänden begrenzt sind, zweite Einzelelemente (8, 9) monolithisch ausgebildet sind und dritte Einzelelemente (10, 11) I-Profil aufweisen,
b) Bearbeitung der Einzelelemente zu deren passgenauem Ineinanderbringen,
c) Ineinanderbringen der Einzelelemente (2 - 11) in ein Harzinjektionswerkzeug (17), derart, dass zwischen den Einzelelementen (2 bis 11) Hohlräume gebildet werden, wobei in die Hohlräume entfernbare Stützkerne (18, 18', 18", 18"') eingefügt werden,
d) Schließen des Harzinjektionswerkzeugs (17) und Injizieren und Aushärten eines Harzsystems unter Druck und erhöhter Temperatur zur Ausbildung des Faserverbundstrukturbauteils (1).

9. Verfahren nach Anspruch 8, **dadurch gekennzeichnet, dass** die Faserhalbzeuge unter jenen ausgewählt werden, die auf mechanisch und/oder thermisch hochbelastbaren Fasern basieren.

10. Verfahren nach Anspruch 9, **dadurch gekennzeichnet, dass** die Faserhalbzeuge aus Kohlenstoff-, Glas-, Siliciumcarbid-, Mullit-, Borcarbid-, Aramid- und/oder Naturfasern ausgewählt sind.

11. Verfahren nach den Ansprüchen 8 bis 10, **dadurch gekennzeichnet, dass** zur Injektion des Harzsystems ein Infiltrierharz auf Duroplast- oder Thermoplastbasis ausgewählt wird.

## Claims

1. Drag brace (1) for a nose gear of an air or spacecraft made of a fibre-reinforced composite in hollow box-type construction, consisting of an upper cover plate (2) and a lower cover plate (3) each having a U-shaped profile, which each are battering from a front portion (12, 12') to a rear portion (13, 13') in an approximately S-shaped curve, upper individual elements (4, 5) and lower individual elements (6, 7), which are battering each from front portions (14, 15) and (14', 15') to rear portions (16, 16') in an approximately S-shaped curve, wherein the cover plates (2, 3) and the upper individual elements (4, 5) as well as the lower individual elements (6, 7) are formed of preforms made of layered semi-finished fibre products and the upper individual elements (4, 5) over each of their open sides of the U-profile grip accurately fitting over open sides of the U-profiles of the lower individual elements (6, 7), such that a cavity is created between them and furthermore monolithic formed feeders (8, 9) with rectangular cross section in the rear portion (16) of the individual elements (6, 7) and cover or nose pieces (10, 11) having an I-profile, whereby the elements (4 to 11) are hold between the cover plates (2, 3), which also fit accurately over each other.

2. Drag brace (1) according to claim 1, **characterized in that** the semi-finished fibre products consist of mechanically and/or thermally highly stressable fibres, respectively that the fibre composite matrix consists of mechanically and/or thermally highly stressable materials.

3. Drag brace (1) according to claim 2, **characterized in that** the semi-finished fibre products are based on carbon fibres, glass fibres, silicon carbide fibres, mullite fibres, boron carbide fibres, aramid fibres and/or natural fibres.

4. Drag brace (1) according to claims 1 to 3, **characterized in that** the fibres are aligned in a unidirectional, crossed and/or multi-axial fashion within the fibre prepreg.

5. Drag brace (1) according to claims 1 to 4, **characterized in that** the fibres are fixed and aligned in a duroplastic or thermoplastic matrix material.

6. Drag brace (1) according to claims 1 to 5, **characterized in that** across its overall volume it has an essentially identical fibre volume content of 60% ± 4.

7. Drag brace (1) according to claims 1 to 6, **characterized in that** it has a wall thickness of 4 to 30 mm, preferably 20 mm.

8. Method for the integral production of a load-bearing thick-walled fibre composite structural component in hollow box-type construction with a complex branched geometry by
a) forming individual elements (2 - 11) of the structural component (1) to be manufactured from preforms by depositing in layers semi-finished fibre products onto preform tools matching the geometry of the structural component (1) and shaping them such that the individual elements (2 - 7) are limited by three walls in their longitudinal extension, second individual elements (8, 9) are embodied monolithically, and third individual elements (10, 11) have an I-profile;
b) processing the individual elements such that they accurately fit into each other;
c) fitting the individual elements (2 - 11) into each other in a resin injection tool (17) in such a way that cavities are formed between the individual elements (2 - 11), wherein removable support cores (18, 18', 18", 18"') are inserted into the cavities;
d) closing the resin injection tool (17) and injecting and curing a resin system under pressure and increased temperature to form the fibre composite structural component (1).

9. Method according to claim 8, **characterized in that** the semi-finished fibre products are selected from those that are based on mechanically and/or thermally highly stressable fibres.

10. Method according to claim 9, **characterized in that** the semi-finished fibre products are selected from carbon, glass, silicon carbide, mullite, boron carbide, aramid and/or natural fibres.

11. Method according to claims 8 to 10, **characterized in that** for injecting the resin system an infiltration resin a duroplastic or thermoplastic basis is selected.

## Revendications

1. Contrefiche coudée (1) pour un train d'atterrissage de véhicules aéronautiques et astronautiques en matériau composite à fibres et en structure vide, consistant d'une dalle de recouvrement supérieure (2) et d'une dalle de recouvrement inférieure (3), les deux avec un profil en U, qui se diminuées d'une partie antérieure (12, 12') vers une partie arrière (13, 13') environ à une forme en S, des éléments individuels supérieurs (4, 5) et des éléments individuels inférieurs (6, 7), qui se diminuées à partir des parties antérieurs (14, 15) et (14', 15') vers des parties arrières (16, 16') environ à une forme en S, où les dalles de recouvrement (2, 3) et les éléments individuels supérieurs (4, 5) ainsi que les éléments individuels inférieurs (6, 7) sont obtenues à partir d'ébauches de produits semi-finis à fibres disposées en couches et les éléments individuels supérieurs (4, 5) par leurs bords ouverts des profils en U s'engagent sans jeu sur les bords ouverts des profils en U des éléments individuels antérieurs (6, 7) de sorte, qu'ils se forment entre eux une cavité et en outre des déposant monolithiques (8, 9) en section rectangulaire dans le partie arrière (16) et des couvercle ou âme (10, 11) avec un profil en I, ou les éléments (4 à 11) sont tenues entre les dalles de recouvrement (2, 3), qui aussi s'engagent sans jeu les uns dans les autres.

2. Contrefiche coudée (1) selon la revendication 1, **caractérisée en ce que** les produits semi-finis à fibres sont constitués par des fibres capables d'être fortement sollicitées mécaniquement et/ou thermiquement, ou respectivement **en ce que** la matrice du composite à fibres est constituée par des matériaux capables d'être fortement sollicités de mécaniquement et/ou thermiquement.

3. Contrefiche coudée (1) selon la revendication 2, **caractérisée en ce que** les produits semi-finis à fibres sont basés sur des fibres de carbone, des fibres de verre, des fibres de carbure de silicium, des fibres de mullite, des fibres de carbure de bore, des fibres aramides et/ou des fibres naturelles.

4. Contrefiche coudée (1) selon les revendications 1 à 3, **caractérisée en ce que** les fibres sont agencées de manière monodirectionnelle, croisée et/ou multiaxiale dans le produit semi-fini à fibres.

5. Contrefiche coudée (1) selon les revendications 1 à 4, **caractérisée en ce que** les fibres sont fixées et orientées dans un matériau de matrice thermodurcissable ou thermoplastique.

6. Contrefiche coudée (1) selon les revendications 1 à 5, **caractérisée en ce qu'**elle présente sur son volume total une teneur volumétrique en fibres sensiblement identique de 60 % +/- 4.

7. Contrefiche coudée (1) selon les revendications 1 à 6, **caractérisée en ce qu'**elle présente une épaisseur de paroi de 4 à 30 mm, de préférence 20 mm.

8. Procédé pour la fabrication intégrale d'une pièce structurelle en composite à fibres à parois épaisses, destinée à supporter des charges avec une géométrie ramifiée complexe, dans un mode de construction en caisson creux par
a) réalisation d'éléments individuels (2 à 11) de la pièce structurelle (1) à fabriquer à partir d'ébauches par déposition en couches de produits semi-finis à fibres sur des outils d'ébauche adaptés à la géométrie de la pièce structurelle (1) et démoulage, de telle façon que des éléments individuels (2 à 7) sont délimités dans leur extension longitudinale par trois parois, que des seconds éléments individuels (8, 9) sont réalisés de façon monolithique, et que des troisièmes éléments individuels (10, 11) présentent un profil en I,
b) usinage des éléments individuels en vue de leur emboîtement mutuel sans jeu,
c) emboîtement mutuel des éléments individuels (2-11) dans un outil d'injection de résine (17), de manière à former des cavités entre les éléments individuels (2 à 11), et introduction dans les cavités de noyaux de soutien (18, 18', 18", 18'") à supprimer,
d) fermeture de l'outil d'injection de résine (17), et injection et durcissement d'un système de résine sous pression et température accrue pour la réalisation de la pièce structurelle (1) en composite à fibres.

9. Procédé selon la revendication 8, **caractérisé en ce que** les produits semi-finis à fibres sont choisis parmi ceux qui sont basés sur des fibres capables d'être fortement sollicitées mécaniquement et/ou thermiquement.

10. Procédé selon la revendication 9, **caractérisé en ce que** les produits semi-finis en fibres sont choisis parmi des fibres de carbone, de verre, de carbure de silicium, de mullite, de carbure de bore, des fibres aramides et/ou des fibres naturelles.

11. Procédé selon les revendications 8 à 10, **caractérisé en ce que** pour l'injection du système de résine on choisit une résine d'infiltration à base thermoplastique ou thermodurcissable.
